# DEMANDE DE BREVET EUROPEEN

(11) **EP 2 436 544 A1**
(43) Date de publication de la demande: **04.04.2012**
(21) Numéro de dépôt: 11167117.8
(22) Date de dépôt: 23.05.2011
(51) Int. Cl.: B60J 3/02, B60J 1/20

(54) **Dispositif occulteur pour véhicule au moyen d'un rideau comprenant des moyens de déverrouillage**

(30) Priorité: 29.09.2010 FR 1057841
(71) Demandeur: Peugeot Citroën Automobiles SA, 78140 Vélizy-Villacoublay (FR)
(72) Inventeur: Sevetier, André, 75016, PARIS (FR); Harlay, Nicolas, 91220, LE PLESSIS PATE (FR)
(74) Mandataire: Vigand, Régis Louis Michel

(57) **Abrégé**

L'invention concerne un dispositif occulteur pour véhicule au moyen d'un rideau (11) comprenant un support d'enroulement (9), deux bras (13, 13') montés sur le support le long desquels le rideau est apte à être guidé entre une position déployée et une position enroulée, une barre de tirage (17) située sur le bord libre du rideau et apte à être immobilisée sur les bras par la coopération d'un premier et d'un deuxième moyen de retenue (55, 55', 31, 31') situés d'une part sur les bras (13, 13') et d'autre part sur la barre (17) pour maintenir le rideau en position déployée.

Selon l'invention, le dispositif comprend des moyens de déverrouillage de la barre (17) aptes à exercer des forces antagonistes appliquées soit sur les bras (13, 13'), soit sur la barre (17) et orientées selon la direction de la barre de façon à éloigner le premier et le deuxième moyen de retenue pour permettre l'enroulement du rideau (11).

L'invention trouve son application notamment dans le domaine des pare-soleils.

## Description

L'invention concerne un dispositif occulteur pour véhicule au moyen d'un rideau comprenant des moyens de déverrouillage. L'invention trouve notamment son application dans le domaine des pare-soleil.

Un véhicule est équipé de pare-soleils fixés généralement sur le pavillon du véhicule en haut du pare-brise. Le pare-soleil est souvent relativement volumineux et s'intègre mal contre le pavillon du véhicule. A cet effet, il peut être intéressant de réduire son volume.

II existe des cache-bagages comprenant des bras repliables fixés sur un support et le long desquels un rideau peut être guidé entre une position déployée et une position enroulée sur le support. Une barre de tirage est prévue sur le bord libre du rideau. Le déplacement de la barre de tirage entraîne le déroulement du rideau et des moyens d'accrochage sont prévus pour maintenir le rideau en position déployée.

Le déverrouillage de la barre implique une manipulation de la part de l'utilisateur de la barre de façon à désengager les moyens d'accrochage de la barre de ceux des bras. Cette manipulation est souvent malaisée car il faut pouvoir incliner la barre selon l'angle désiré pour pouvoir la désolidariser des bras.

Le but de la présente invention est de proposer un dispositif occulteur qui présente un encombrement réduit et dont la barre de tirage peut être désolidarisée automatiquement à l'aide d'une simple pression de l'utilisateur sur la barre. Ce dispositif facilite la manipulation par l'utilisateur.

A cet effet, l'invention concerne un dispositif occulteur pour véhicule au moyen d'un rideau comprenant un support d'enroulement, deux bras montés sur le support le long desquels le rideau est apte à être guidé entre une position déployée et une position enroulée, une barre de tirage située sur le bord libre du rideau et apte à être immobilisée sur les bras par la coopération d'un premier et d'un deuxième moyen de retenue situés d'une part sur les bras et d'autre part sur la barre pour maintenir le rideau en position déployée caractérisé en ce que le dispositif comprend des moyens de déverrouillage de la barre aptes à exercer des forces antagonistes appliquées soit sur les bras, soit sur la barre et orientées selon la direction de la barre de façon à éloigner le premier et le deuxième moyen de retenue pour permettre l'enroulement du rideau.

Conformément à d'autres caractéristiques avantageuses de l'invention :
- les moyens de déverrouillage sont aptes à exercer une pression sur les bras de façon à les écarter pour déverrouiller la barre ;
- les bras sont montés mobiles en rotation ;
- les bras sont repliables contre le support d'enroulement ;
- les bras comprennent un moyen de rappel au niveau de son axe de rotation ;
- les moyens de déverrouillage comportent une lame extensible située sur la barre et qui prend appui sur les bras lors de son extension pour pousser les bras vers l'extérieur ;
- le premier moyen de retenue comporte des tétons aux extrémités de la barre et en ce que le deuxième moyen de retenue comporte un chemin de guidage le long duquel les tétons sont guidés ;
- le chemin de guidage comprend une portion rectiligne et une portion coudée à l'extrémité libre du bras ;
- les portions rectilignes se rapprochent jusqu'aux extrémités libres des bras puis forment un coude orienté vers l'extérieur ;
- les tétons sont placés sur une même face de la barre ;
- le dispositif occulteur est un pare-soleil.

D'autres particularités et avantages ressortiront clairement de la description qui en est faite ci-après, à titre indicatif et nullement limitatif, en référence aux dessins annexés, dans lesquels :
- la figure 1a est une vue de dessus d'un dispositif occulteur dans une première position dans laquelle les bras sont repliés et le rideau est enroulé ;
- la figure 1b est une vue de dessus d'un dispositif occulteur dans une deuxième position dans laquelle les bras sont dépliés et le rideau est déployé ;
- la figure 2 est un détail selon la figure 1 de l'extrémité d'un bras quand le rideau est déployé ;
- la figure 3 est une vue de côté du bord libre du rideau du dispositif selon la figure 1 dans sa deuxième position dépliée ;
- la figure 4 est une vue de face selon la figure 1 de la barre de tirage guidée le long des bras et de la lame extensible ;
- la figure 5 est une vue de face de l'ensemble du dispositif selon la figure 1 ;
- la figure 6 montre une extrémité de la lame extensible entrant dans le chemin de guidage d'un bras ;
- la figure 7 montre un bras vu de face.

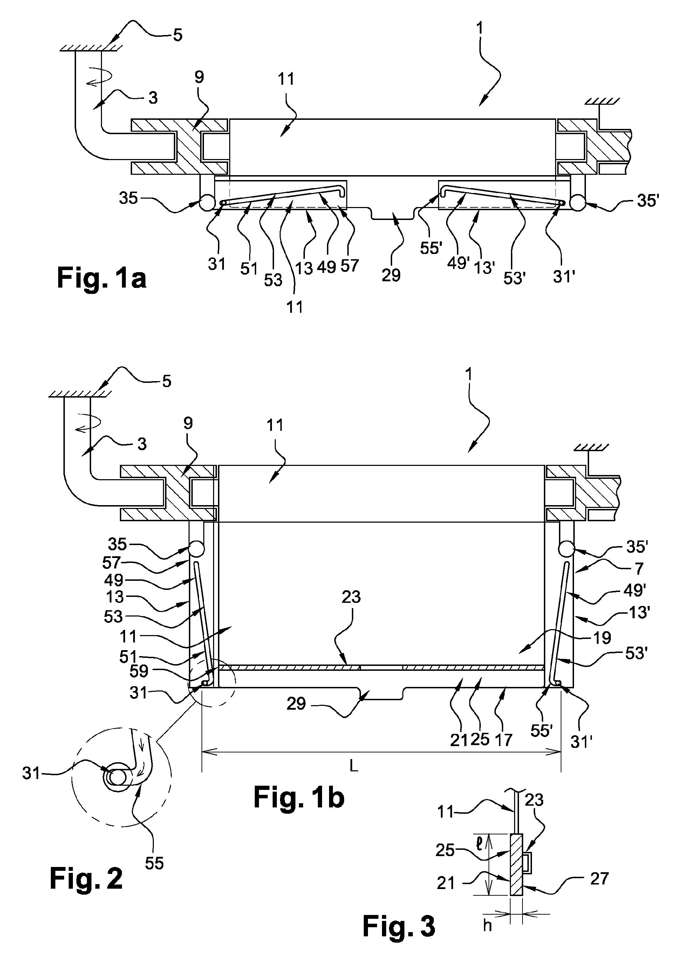

La figure 1 montre un pare-soleil 1 comprenant une branche 3 fixée en rotation sur le pavillon 5 d'un véhicule sur laquelle est fixé un dispositif occulteur 7 selon l'invention.

Le dispositif occulteur 7 comprend un support d'enroulement 9, un rideau 11, deux bras 13 et 13' montés sur le support le long desquels le rideau 11 est apte à être guidé entre une position enroulée (figure 1a) et une position déployée (figure 1 b). Pour manipuler le rideau 11 , une barre de tirage 17 est prévue sur son bord libre 19.

Le support d'enroulement 9 permet au rideau 11 de s'enrouler autour lorsque le rideau n'est pas déployé. Le support 9 est muni d'un ressort (non représenté) de façon à permettre l'enroulement automatique du rideau autour du support.

Le rideau 11 est réalisé en un matériau souple comme de la toile par exemple. Il présente une forme de parallélogramme.

En référence à la figure 1b et à la figure 3, la barre de tirage 17 comprend un corps rigide 21 et une lame extensible 23.

Le corps rigide 21 a une forme générale de parallélépipède dont la longueur L correspond à celle du bord libre du rideau et dont la largeur I est supérieure à sa hauteur h. Il en résulte que la barre 17 est relativement plane et présente une surface supérieure 25 et une surface inférieure 27 assez étendues.

Le corps rigide 21 comprend une partie saillante située en son milieu formant organe de préhension 29 pour faciliter sa manipulation par l'utilisateur.

La barre de tirage 17 comprend deux tétons 31 et 31' à chacune de ses extrémités sur sa surface inférieure 27. Ces tétons sont montés fixes sur la barre 17. Chaque téton a une forme de champignon.

La lame extensible 23 est fixée sur le corps rigide 21 sur sa surface inférieure 27 selon la figure 3. La lame extensible a une longueur sensiblement égale à l'écartement entre les deux bras 13 et 13' lorsqu'elle est en position rétractée. En extension, la lame a une longueur augmentée.

Le rideau 11 et la barre de tirage 17 du dispositif occulteur sont guidés le long de ses deux bras 13 et 13'.

Les bras 13 et 13' sont montés mobiles autour d'un axe de rotation 35, respectivement 35' sur le support d'enroulement 9 entre une position dans laquelle ils sont repliés sur le support et une position dans laquelle ils sont dépliés. Dans leur position dépliée, les bras 13 et 13' forment un angle sensiblement égal à 90 degrés avec le support 9.

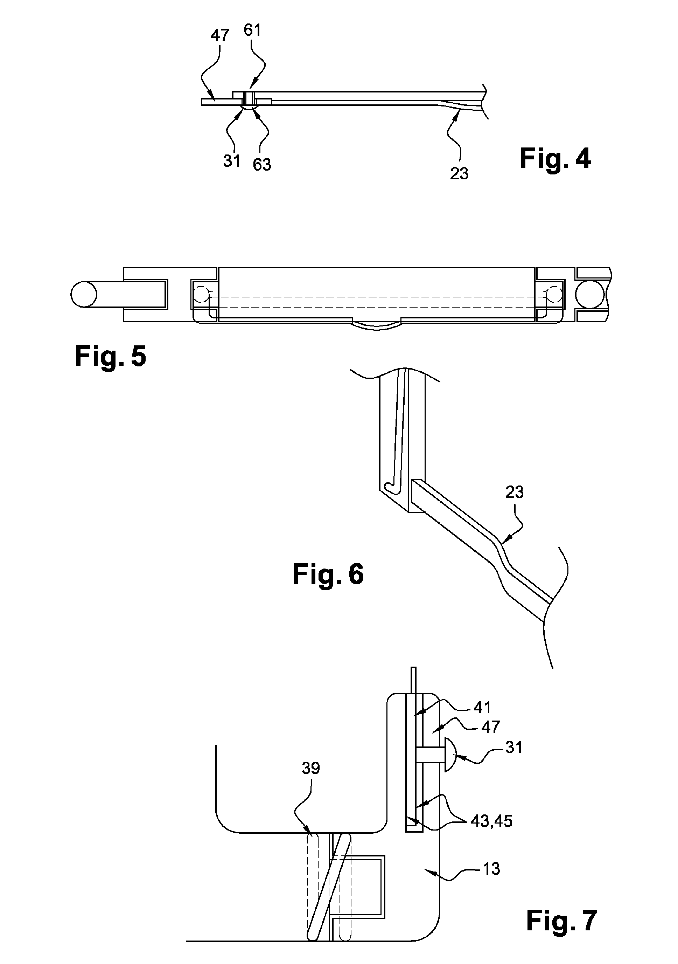

Selon la figure 7, les bras 13 et 13' sont reliés au support 9 par l'intermédiaire d'un ressort 39, respectivement 39', placé au niveau de l'axe de rotation. Ce ressort permet aux bras de s'écarter de leur position dépliée à 90 degrés vers une position plus ouverte supérieure à 90 degrés. Le jeu que permet ce ressort est de l'ordre de quelques degrés à 10 degrés supplémentaires vers l'extérieur.

Les bras 13 et 13' comprennent chacun une glissière dans laquelle les bords du rideau peuvent être guidés et maintenus lorsque le rideau est déployé. La glissière 41 du bras 13 est visible sur la figure 7 et sa longueur est la même que celle du bras.

La glissière 41 présente une paroi inférieure 43 et une paroi supérieure 45 entre lesquelles le rideau 11 glisse.

La partie inférieure 47 de la glissière comprenant la paroi inférieure 43 comporte en outre une fente courant sur toute la longueur du bras. La fente définit un chemin de guidage 49 sur le bras gauche et un chemin de guidage 49' sur le bras droit pour les tétons de la barre de tirage.

Si on se réfère au seul bras gauche 13, le chemin de guidage 49, visible sur la figure 1, comprend une portion rectiligne 53 et une portion coudée 55, étant entendu que le bras droit 13' comprend également un chemin de guidage similaire référencé 53' et 55'.

La portion rectiligne 53 commence sur le bord extérieur 57 du bras, au plus proche du support d'enroulement 9 pour se terminer sur le bord intérieur 59 du bras 13 à son extrémité libre. Le chemin de guidage 49 se poursuit par la portion coudée 55, plus visible sur la figure 2, qui est en forme de virgule et qui s'oriente vers le bord extérieur 57 du bras 13.

La fente est réalisée sur toute l'épaisseur de la partie inférieure 47 de la glissière 41. Cette partie inférieure 47 est donc ajourée sur tout le chemin de guidage 49.

La barre de tirage 17 est insérée dans les glissières 41 et 41' (non visible) et peut glisser librement d'avant en arrière dans celle-ci de façon à déployer le rideau 11 quand la barre est guidée vers l'avant et à enrouler le rideau 11 quand la barre est guidée vers l'arrière.

En référence à la figure 4, les tétons 31 et 31' de la barre sont introduits dans la fente. Le téton 31 situé sur la partie gauche de la barre est inséré dans la fente du bras gauche. Le téton 31' situé sur la partie droite de la barre est inséré dans la fente du bras droit. Du fait de sa forme de champignon, le téton comprend un pied 61 et un chapeau 63 (figure 4). C'est le pied 61 du téton 31 qui coulisse le long de la fente. Le chapeau 63 se trouve sous la barre et permet d'empêcher le téton 31 de sortir de la fente.

Nous allons à présent voir la façon dont le dispositif occulteur fonctionne.

Initialement et conformément à la figure 1a, le dispositif occulteur 7 est en position complètement escamotée contre le pavillon du véhicule. Le rideau 11 est enroulé et les deux bras 13 et 13' sont repliés sur le support 9.

Lorsque l'utilisateur souhaite déployer le dispositif, il se saisit de la barre de tirage 17 au niveau de son organe de préhension 29. Il la fait ensuite coulisser le long des glissières. Les tétons 31 et 31' de la barre de tirage 17 suivent les chemins de guidage 49 et 49'. Le chemin de guidage 49' du bras droit 13' se rapproche du chemin de guidage 49 du bras gauche 13. Ceci implique qu'au fur et à mesure de la progression de la barre de tirage 17 le long des portions rectilignes gauche 53 et droite, les bras 13 et 13' s'écartent l'un de l'autre.

Lorsque la barre de tirage 17 arrive en bout de course de la portion rectiligne 53, le téton gauche 31 s'engage dans la portion coudée 55. A ce niveau, les chemins de guidage 49 et 49' s'éloignent l'un de l'autre, ce qui implique que les bras 13 et 13' reviennent à leur position initiale à 90 degrés du support 9, sous l'effet de la force de rappel des ressorts. La barre de tirage 17 est alors verrouillée en position déployée et le rideau est totalement déroulé.

Lorsque l'utilisateur souhaite ranger le dispositif, il se saisit de la barre de tirage 17 et appuie du pouce par exemple sur la lame extensible 23 qui, sous l'effet de la force appliquée, s'allonge et vient appuyer au niveau de ses extrémités sur les parois des bras latéraux 13 et 13' (figure 6).

Les bras latéraux 13 et 13' s'écartent de leur position initiale en s'ouvrant plus largement que leur position à 90 degrés par rapport au support 9. En s'écartant, les tétons 31 et 31' sont guidés le long des portions coudées 55 et 55' des chemins de guidage 49 et 49' et se retrouvant ainsi aiguillés le long des portions rectilignes 53 et 53'. De cette manière, la barre 17 est déverrouillée des bras 13 et 13' et peut à nouveau coulisser le long de la glissière jusqu'à se retrouver contre le support 9. Le rideau 11 s'enroule automatiquement grâce au moyen de rappel situé sur l'enrouleur.

Pour finir de ranger le dispositif, l'utilisateur replie les bras 13 et 13' contre le support 9.

Selon un mode de réalisation non représenté, les tétons pourraient être montés mobiles en translation de façon à pouvoir se rapprocher et s'éloigner des bras qui resteraient fixes. En s'éloignant l'un de l'autre, les tétons s'engageraient dans la portion coudée du chemin de guidage, impliquant ainsi le verrouillage de la barre sur les bras. A l'inverse, en se rapprochant l'un de l'autre, ils se désengageraient de cette portion coudée, impliquant ainsi le déverrouillage de la barre sur les bras. Les tétons sont solidaires de la lame. Dans ce type de configuration, le déverrouillage s'effectue par une action de tirage sur la lame et non de poussée.

## Revendications

1. Dispositif occulteur pour véhicule au moyen d'un rideau (11) comprenant un support d'enroulement (9), deux bras (13, 13') montés sur le support le long desquels le rideau est apte à être guidé entre une position déployée et une position enroulée, une barre de tirage (17) située sur le bord libre du rideau et apte à être immobilisée sur les bras par la coopération d'un premier et d'un deuxième moyen de retenue (55, 55', 31, 31') situés d'une part sur les bras (13, 13') et d'autre part sur la barre (17) pour maintenir le rideau en position déployée **caractérisé en ce que** le dispositif (7) comprend des moyens de déverrouillage de la barre aptes à exercer des forces antagonistes appliquées soit sur les bras (13, 13'), soit sur la barre (17) et orientées selon la direction de la barre de façon à éloigner le premier et le deuxième moyen de retenue pour permettre l'enroulement du rideau (11).

2. Dispositif occulteur selon la revendication 1 **caractérisé en ce que** les moyens de déverrouillage sont aptes à exercer une pression sur les bras (13, 13') de façon à les écarter pour déverrouiller la barre (17).

3. Dispositif occulteur selon la revendication 2 **caractérisé en ce que** les bras (13, 13') sont montés mobiles en rotation.

4. Dispositif occulteur selon l'un des revendications 2 ou 3 **caractérisé en ce que** les bras (13, 13') sont repliables contre le support d'enroulement (9).

5. Dispositif occulteur selon l'une quelconque des revendications 2 à 4 **caractérisé en ce que** les bras (13, 13') comprennent un moyen de rappel au niveau de son axe de rotation (35, 35').

6. Dispositif occulteur selon l'une quelconque des revendications 2 à 5 **caractérisé en ce que** les moyens de déverrouillage comportent une lame extensible (23) située sur la barre (17) et qui prend appui sur les bras (13, 13') lors de son extension pour pousser les bras vers l'extérieur.

7. Dispositif occulteur selon l'une quelconque des revendications 2 à 6 **caractérisé en ce que** le premier moyen de retenue comporte des tétons (31, 31') aux extrémités de la barre (17) et **en ce que** le deuxième moyen de retenue comporte un chemin de guidage (49, 49') le long duquel les tétons sont guidés.

8. Dispositif occulteur selon la revendication 7 **caractérisé en ce que** le chemin de guidage (49, 49') comprend une portion rectiligne (53, 53') et une portion coudée (55, 55') à l'extrémité libre du bras (13, 13').

9. Dispositif occulteur selon la revendication 8 **caractérisé en ce que** les portions rectilignes (53, 53') se rapprochent jusqu'aux extrémités libres des bras puis forment des coudes (55, 55') orientés vers l'extérieur.

10. Dispositif occulteur selon l'une quelconque des revendications 7 à 9 **caractérisé en ce que** les tétons (31, 31') sont placés sur une même face (27) de la barre (17).

11. Dispositif occulteur selon l'une quelconque des revendications précédentes **caractérisé en ce que** le dispositif occulteur est un pare-soleil (1).
